# EUROPEAN PATENT APPLICATION

(11) **EP 2 944 617 A1**
(43) Date of publication of application: **18.11.2015**
(21) Application number: 13870417.6
(22) Date of filing: 25.12.2013
(51) Int. Cl.: C03B 23/03, C03B 27/044

(54) **MANUFACTURING METHOD AND MANUFACTURING DEVICE FOR TOUGHENED GLASS**

(30) Priority: 11.01.2013 JP 2013003953
(71) Applicant: Asahi Glass Company, Limited, Tokyo 100-8405 (JP)
(72) Inventor: OTA, Shinya, Tokyo 100-8405 (JP)
(74) Representative: Müller-Boré & Partner Patentanwälte PartG mbB
(86) International application number: PCT/JP2013/084733
(87) International publication number: WO 2014/109237

(57) **Abstract**

The present invention relates to a method of manufacturing tempered glass that involves bending a glass plate into a desired shape by holding the glass plate that has been heated to a predetermined temperature between a lower mold ring and an upper mold. The method includes a press-molding step of press-molding the glass plate while having a buffer member interposed between the lower mold ring and the upper mold, wherein the glass plate comes into contact with the buffer member; and a cooling step of cooling the glass plate that has been press-molded in the press-molding step, wherein the glass plate is cooled on the lower mold ring without coming into contact with the buffer member.

## Description

### TECHNICAL FIELD

The present invention relates generally to a method and an apparatus for manufacturing tempered glass, and particularly to a method and an apparatus for manufacturing tempered glass that involves bending a flat glass plate into a desired shape by pressing the flat glass plate that has been heated to a predetermined temperature between a lower mold ring and an upper mold, and tempering the glass plate thereafter.

### BACKGROUND ART

A method and an apparatus for manufacturing tempered glass are known that involves heating a flat glass plate to a softening temperature in a heating furnace, bending the heated flat glass plate into a desired shape, and tempering the glass plate thereafter (e.g., see Patent Document 1). Such a tempered glass manufacturing apparatus includes a press ring as a lower mold having a concave shape on which a glass plate that has been heated to the softening temperature is mounted, and a press mold as an upper mold having a downwardly convex shape that is paired with the press ring. A glass plate that is placed on the press ring is held (pressed) between the press ring and the press mold to be bent into a desired shape along the lower face of the press mold and the upper face of the press ring.

Also, the above tempered glass manufacturing apparatus includes a shuttle for transferring the press mold between a position directly below the press mold and a position of a cooling unit. The glass plate on the press ring that has been bent is transferred by the shuttle to be loaded into the cooling unit, and the glass plate is rapidly cooled (quenched) and strengthened in the cooling unit while floating from the press ring owing to a pressure difference of air blowing from the upper side and the lower side of the cooling unit. In the above tempered glass manufacturing apparatus, the press ring that holds the glass plate with the press mold also acts as a quench ring for rapidly cooling the glass plate that has been bent and shaped. That is, a common ring (i.e., PQ (press-quench) ring) is used.

### PRIOR ART DOCUMENTS

### PATENT DOCUMENTS

Patent Document 1: Japanese Laid-Open Patent Publication No. H07-89739

### SUMMARY OF THE INVENTION

### PROBLEM TO BE SOLVED BY THE INVENTION

In the case of arranging the glass plate that has been bent to float in the cooling unit upon being cooled, space needs to be secured for enabling the glass plate to float. Thus, there is a lower limit on the space that could be reduced between upper and lower air outlets of the cooling unit such that efficient cooling becomes difficult. Also, in some techniques, the glass plate that has been bent may be cooled in the cooling unit while being placed on a quench ring. In such a cooling technique, the quench ring may be formed into a comb shape in order to effectively cool the peripheral portion of the glass plate. However, in a case where a PQ ring is formed into a comb shape, although the glass plate that has been bent may be effectively cooled in the cooling unit by being placed on the comb-shaped ring, bending and shaping the glass plate may be difficult. That is, when a large amount of pressing force is applied upon pressing the glass plate between the PQ ring and the press mold, comb marks may be formed on the surface of the glass plate. However, when an adequately large amount of pressing force is not used, deep bending of the glass plate may be difficult.

The present invention has been conceived in view of the foregoing problems, and it is an object of the present invention to provide a method and an apparatus for manufacturing tempered glass that enables adequately deep bending of a glass plate while ensuring effective cooling of the glass plate that has been bent.

### MEANS FOR SOLVING THE PROBLEM

The above object may be achieved by a method of manufacturing tempered glass that includes bending a glass plate into a desired shape by holding the glass plate that has been heated to a predetermined temperature between a lower mold ring and an upper mold. The method includes a press-molding step of press-molding the glass plate while having a buffer member interposed between the lower mold ring and the upper mold, wherein the glass plate comes into contact with the buffer member; and a cooling step of cooling the glass plate that has been press-molded in the press-molding step, wherein the glass plate is cooled on the lower mold ring without coming into contact with the buffer member.

Also, the above object may be achieved by an apparatus for manufacturing tempered glass that is configured to bend a glass plate into a desired shape by holding the glass plate that has been heated to a predetermined temperature between a lower mold ring and an upper mold. The apparatus includes a buffer member that is interposed between the lower mold ring and the upper mold to come into contact with the glass plate when the glass plate is to be press-molded by the lower mold ring and the upper mold, wherein the buffer member is retracted from the position between the lower mold ring and the upper mold to not come into contact with the glass plate when the glass plate that had been press-molded is to be cooled on the lower mold ring.

According to the above embodiments of the present invention, a glass plate may be press-molded while the buffer member is interposed between the lower mold ring and the upper mold, and the buffer member comes into contact with the glass plate. Then, the glass plate that has been press-molded may be cooled on the lower mold ring without coming into contact with the buffer member. By interposing the buffer member between the lower mold ring and the upper mold, deep bending of the glass plate may be enabled. Also, by not interposing the buffer member between the lower mold ring and the upper mold, the glass plate may be cooled while being placed on the lower mold ring. Thus, according to an aspect of the present invention, adequately deep bending of a glass plate may be enabled while ensuring effective cooling of the glass plate that has been bent.

### ADVANTAGEOUS EFFECT OF THE INVENTION

According to an aspect of the present invention, adequately deep bending of a glass plate may be enabled while ensuring effective cooling of the glass plate that has been bent.

### BRIEF DESCRIPTION OF THE DRAWINGS

FIG. 1 is a block diagram illustrating an apparatus for manufacturing tempered glass according to an embodiment of the present invention;
FIG. 2 illustrates an exemplary configuration and operation of a moving mechanism of the apparatus for manufacturing tempered glass according to an embodiment of the present invention;
FIG. 3 illustrates another exemplary configuration and operation of a moving mechanism of the apparatus for manufacturing tempered glass according to an embodiment of the present invention;
FIG. 4 illustrates another exemplary configuration and operation of a moving mechanism of the apparatus for manufacturing tempered glass according to an embodiment of the present invention;
FIG. 5 is a top view of a lower mold ring and a surrounding of the lower mold ring of the apparatus for manufacturing tempered glass according to an embodiment of the present invention;
FIG. 6 illustrates exemplary process steps of a glass bending process performed by the apparatus for manufacturing tempered glass according to an embodiment of the present invention where bending is performed outside a furnace; and
FIG. 7 illustrates exemplary process steps of a glass bending process performed by the apparatus for manufacturing tempered glass according to an embodiment of the present invention where bending is performed inside a furnace.

### EMBODIMENTS FOR IMPLEMENTING THE INVENTION

In the following, embodiments of a method and an apparatus for manufacturing tempered glass according to the present invention are described with reference to the accompanying drawings.

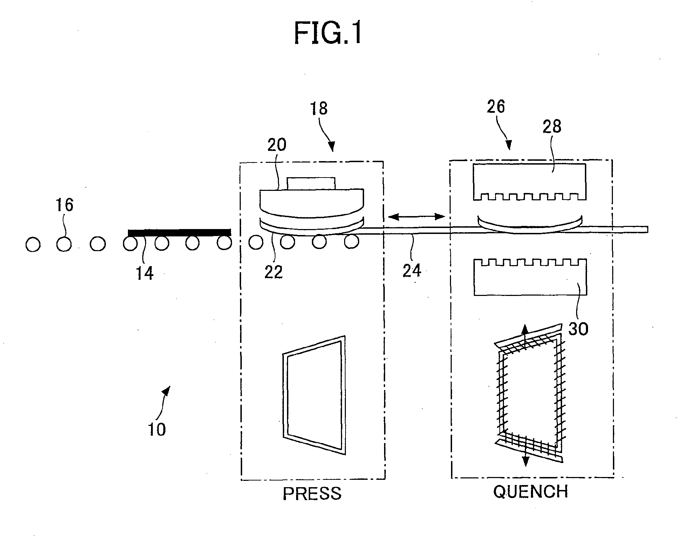

FIG. 1 is a block diagram illustrating an apparatus 10 for manufacturing tempered glass according to an embodiment of the present invention. The apparatus 10 for manufacturing tempered glass according to the present embodiment may be an apparatus for press-bending a glass plate into a desired curved shape as required for application to a windshield glass or a rear glass of transportation machinery such as an automobile or a train, or architectural glass, for example, and tempering the glass plate by cooling the glass plate after the press molding process.

A glass plate 14 as the object to be molded/cooled in the apparatus 10 for manufacturing tempered glass is cut into a predetermined planar shape, and is then heated in a heating furnace (not illustrated in FIG. 1) to a bendable temperature (softening temperature; e.g., around 600 C° to 700 C°) while being conveyed by a roller conveyor 16.

The apparatus 10 for manufacturing tempered glass includes a pressing unit 18 and a cooling unit 26. The pressing unit 18 includes an upper mold 20 and a lower mold ring 22. That is, the upper mold 20 and the lower mold ring 22 are paired up to constitute a press-molding unit for press-molding the glass plate 14 into a desired curved shape. The shape of the upper mold 20 and the shape of the lower mold ring 22 are arranged to have matching mold faces, and are arranged to conform to shapes required for achieving a desired plate thickness and a desired curved shape of the glass plate 14.

The upper mold 20 is arranged above a conveying face of the glass plate 14 that is conveyed by the roller conveyor 16. The upper mold 20 is an upper press mold for pressing the glass plate 14 that is placed on the lower mold ring 22 from the upper side. The upper mold 20 is arranged into a downwardly convex shape having a lower surface matching the desired curved shape for the surface of the glass plate 14. Note that the lower surface shape of the upper mold 20 may correspond to the final curved shape of a final product of the glass plate 14 that may be bent in a conveying direction and/or a direction perpendicular to the conveying direction of the glass plate 14.

On the other hand, the lower mold ring 22 is arranged opposite the upper mold ring 20 at a position below the conveying face of the glass plate 14 that is conveyed by the roller conveyor 16. The lower mold ring 22 is a lower mold press ring for supporting the glass plate 14 from the lower side. The lower mold ring 22 is arranged into a concave shape having a frame shape matching the profile of the desired curved shape of the glass plate 14.

Note that a peripheral portion of the glass plate 14 that is supported by the lower mold ring 22 may include a peripheral edge of the glass plate 14, for example. Alternatively, the peripheral portion may not include the peripheral edge but may simply be a portion in the vicinity of the peripheral edge. Also, the shape of the lower mold ring 22 may be arranged to support the entire peripheral portion of the glass plate 14, or it may be arranged to support only a part of the peripheral portion. For example, the lower mold ring 22 may be arranged to support sides of the glass plate 14 that are positioned at the outer side of the roller conveyor 16, lateral sides of the glass plate 14 in a case where the glass plate 14 is arranged to be substantially rectangular, or at least two opposite sides of the glass plate 14 corresponding to non-parallel sides in a case where the glass plate 14 is arranged to be substantially trapezoidal. Note that the shape of the lower mold ring 22 conforms to the desired curved shape of the glass plate 14 that may be bent in the conveying direction and/or the direction perpendicular to the conveying direction of the glass plate 14.

The apparatus 10 for manufacturing tempered glass includes a lift jet (not illustrated) for lifting and separating the glass plate 14 from the conveying face of the roller conveyor 16 against gravitational forces and attaching the glass plate 14 to the lower surface of the upper mold 20 by suction after the glass plate 14 has been conveyed to a conveying direction downstream end of the roller conveyor 16. For example, the lift jet may be arranged below the conveying face of the roller conveyor 16 and be configured to blow out air in an upward direction toward the upper mold 20. Alternatively, the lift jet may be configured to suck air through air suction holes that are densely formed on the lower surface of the upper mold 20, for example. The glass plate 14 that has been conveyed to the conveying direction downstream end of the roller conveyor 16 is separated from the conveying face of the roller conveyor 16 and is moved upward to be attached to the lower surface of the upper mold 20 by the operation of the lift jet.

On the other hand, the lower mold ring 22 is supported by a shuttle 24 that can move between the upper mold 20 of the pressing unit 18 and the cooling unit 26. The shuttle 24 is capable of moving at least between a position directly below the upper mold 20 of the pressing unit 18 and a position of the cooling unit 26 that is arranged adjacent to the downstream side of the upper mold 20. Note that the shuttle 24 may be configured to move further toward the conveying direction downstream side of the cooling unit 26 so that the glass plate 14 may be retrieved after completion of the cooling process, for example. The lower mold ring 22 is transferred at least between a position directly below the upper mold 20 and the position of the cooling unit 26 by the transfer movement of the shuttle 24. When a press-bending process is to be performed on the glass plate 14, the shuttle 24 moves toward the position directly below the upper mold 20 of the pressing unit 18 such that the lower mold ring 22 is positioned directly below the upper mold 20.

The above-described shuttle 24 is also capable of being moved up and down relative to the conveying face of the glass plate 14 by a lifting unit (not illustrated). The lifting unit is capable of moving the shuttle 24 in the upward direction until the glass plate 14 that is attached to the lower surface of the upper mold 20 is held between the upper mold 20 and the lower mold ring 22 that is supported by the shuttle 24. By raising the shuttle 24 by the lifting unit, the glass plate 14 that is attached to the lower surface of the upper mold 20 may be held between the upper mold 20 and lower mold ring 22 to be press-bent into a desired curved shape.

The cooling unit 26 is arranged adjacent to the downstream side of the upper mold 20 of the pressing unit 18. The cooling unit 26 is a device for cooling the glass plate 14 that has been press-bent into a desired curved shape by being held between the upper mold 20 and the lower mold ring 22. The cooling unit 26 includes an upper nozzle 28 and a lower nozzle 30. The upper nozzle 28 and the lower nozzle 30 are spaced apart by a predetermined distance in the upward-downward direction such that the shuttle 24 supporting the glass plate 14 may be interposed between the upper nozzle 28 and the lower nozzle 30. Note that the upper nozzle 28 and the lower nozzle 30 may be configured to move relative to each other in the upward-downward direction.

The upper nozzle 28 and the lower nozzle 30 are each configured to blow air onto the glass plate 14 that is placed on the lower mold ring 22 of the shuttle 24 to cool the glass plate 14. When cooling the glass plate 14 that has been press-bent at the cooling unit 26, the shuttle 24 moves from the position directly below the upper mold 20 toward the cooling unit 26 such that the lower mold ring 22 is positioned within the cooling unit 26. The glass plate 14 that has been press-bent by the upper mold 20 and the lower mold ring 22 is transferred by the shuttle 24 to the cooling unit 26 to be tempered by an air-cooling process.

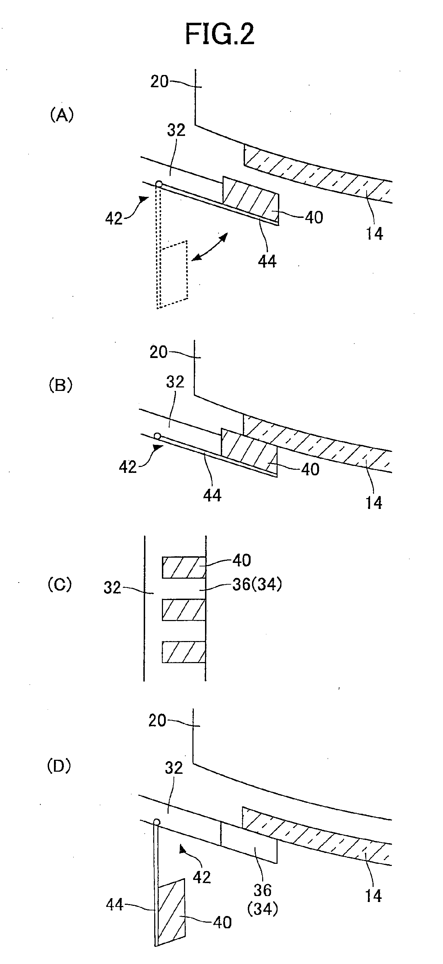

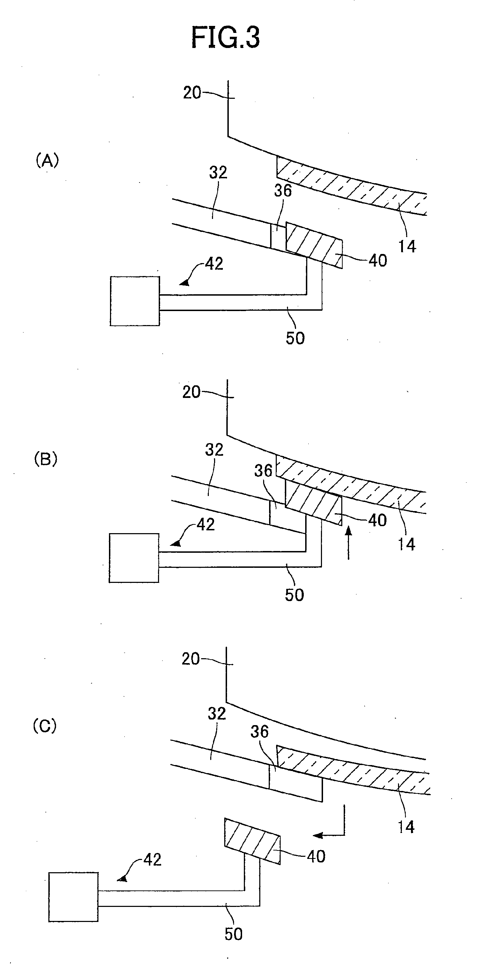

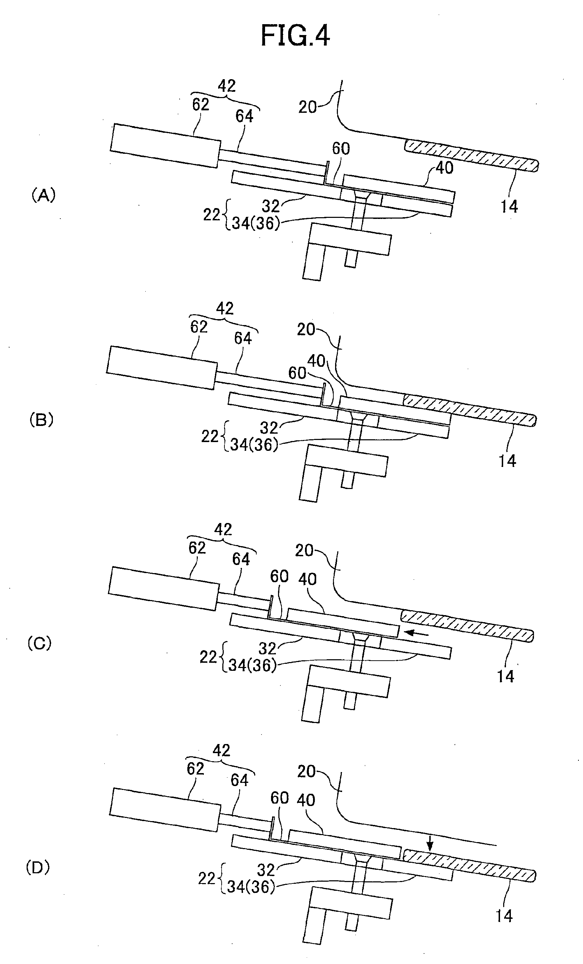

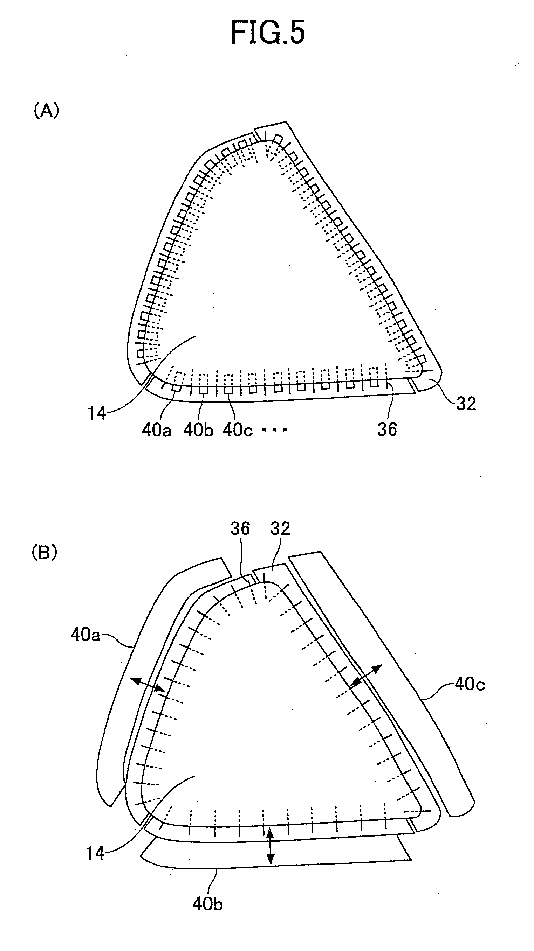

FIGS. 2 to 4 illustrate exemplary configurations and operations of moving mechanisms that may be used in the apparatus 10 for manufacturing tempered glass according to the present embodiment. Note that FIG. 2 (A), FIG. 3 (A), and FIG. 4 (A) are cross-sectional views illustrating states before the glass plate 14 is press-bent; FIG. 2 (B), FIG. 3 (B), and FIG. 4 (B) are cross-sectional views illustrating states where the glass plate 14 is press-bent; FIG. 2 (C) is a top view of the state where the glass plate 14 is press-bent; FIG. 2 (D), FIG. 3(C), and FIG. 4 (C) are cross-sectional views illustrating states where the glass plate 14 is retracted; and FIG. 2(D), FIG. 3 (C), and FIG. 4 (D) are cross-sectional views illustrating states where the glass plate 14 is cooled. Also, FIG. 5 (A) is a top view of the lower mold ring 22 and the surrounding of the lower mold ring 22 of the apparatus 10 for manufacturing tempered glass that uses the moving mechanism as illustrated in FIG. 2 or FIG. 3. FIG. 5 (B) is a top view of the lower mold ring 22 and the surrounding of the lower mold ring 22 of the apparatus 10 for manufacturing tempered glass that uses the moving mechanism as illustrated in FIG. 4.

In the present embodiment, the lower mold ring 22 includes a frame portion 32 and a comb portion 34. The frame portion 32 has a predetermined width and is arranged into an annular shape with a hole approximately the size of the glass plate 14 formed at its central portion. The comb portion 34 is arranged around the entire inner periphery of the frame portion 32 and includes a plurality of tooth portions 36 projecting toward the center from the inner edge of the frame portion 32. Note that adjacent tooth portions 36 are spaced apart from each other by a predetermined distance.

Note that the size of the profile formed by connecting the roots of all the tooth portions 36 is slightly larger than the size of the press-bent glass sheet 14. On the other hand, the size of the profile formed by connecting the tips of all the tooth portions 36 is slightly smaller than the size of the press-bent glass sheet 14. Thus, when the press-bent glass plate 14 is placed on the lower mold ring 22, it may come into contact with the comb portion 34 and be supported by the comb portion 34. The comb portion 34 is a member for effectively cooling the press-bent glass plate 14 (particularly its peripheral portion) while cooling the glass plate 14 in the cooling unit 26 and adequately supporting the glass plate 14 by the lower mold ring 22 at the same time.

The apparatus 10 for manufacturing tempered glass also includes a buffer member 40. The buffer member 40 is supported integrally with the lower mold ring 22 on the shuttle 24. The buffer member 40 is a plate member that is arranged between the glass plate 14 and the comb portion 34 of the lower mold ring 22 to support the peripheral portion of the glass plate 14 when the glass plate 14 is to be press-bent by the upper mold 20 and the lower mold ring 22 of the pressing unit 18. The buffer member 40 may be a plate member made of a metal member having a surface that is coated by thermal spraying, a felt member, or a metal mesh member, for example.

The buffer member 40 is arranged annularly along the frame portion 32 and includes a plurality of buffer pieces 40a, 40b, 40c, ... that are divided up in the peripheral direction according to the shape of the frame portion 32 or the shape of the glass plate 14. The plurality of buffer pieces 40a, 40b, 40c, ... are arranged along the periphery of the glass plate 14. When the glass plate 14 has a rectangular shape, the buffer pieces may be divided into four along the four sides of the glass plate 14. When the glass plate 14 has a triangular shape, the buffer pieces may be divided into three along the three sides of the glass plate 14. The buffer pieces 40a, 40b, 40c, ... are each capable of filling at least a space between the tooth portions 36 of the comb portion 34. When filling the space between the tooth portions 36, the buffer piece is fixed to protrude slightly above the surface of the tooth portion 36. When the glass plate 14 is to be press-bent by the upper mold 20 and lower mold ring 22, the buffer member 40 is interposed between the upper mold 20 and the lower mold ring 22. More specifically, the buffer member 40 is interposed between the glass plate 14 that is attached to the upper mold 20 and the lower mold ring 22.

The apparatus 10 for manufacturing tempered glass also includes a moving mechanism 42. The moving mechanism 42 is integrally supported with the lower mold ring 22 on the shuttle 24. The moving mechanism 42 is a mechanism for moving the buffer member 40 between a contact position where the buffer member 40 comes into contact with the glass plate 14 that is to be press-bent (hereinafter referred to as "contact position") and a non-contact position where the buffer member 40 does not come into contact with the glass plate 14 that is to be cooled after press-bending (hereinafter referred to as "non-contact position").

For example, as illustrated in FIG. 2, the moving mechanism 42 may have a metal member 44 made of pure titanium or the like, and the metal member 44 may be rotatably supported by the moving mechanism 42. That is, the metal member 44 may be a rotating member that rotates around a horizontally extending fulcrum shaft that is arranged outside the plane of the glass plate 14 (e.g., on the lower surface of the frame portion 32 of the lower mold ring 22). The metal member 44 is provided for each of the buffer pieces 40a, 40b, 40c, ... of the buffer member 40, and the metal member 44 is shaped such that it can fill the space between the tooth portions 36 of the comb portion 34. In this case, the moving mechanism 42 may be implemented by a piston that is attached to a front end on the opposite side of the fulcrum of the metal member 44. Also, in some cases, the moving mechanism 42 may be provided for each of the buffer pieces 40a, 40b, 40c, ... of the buffer member 40, for example.

The above-described buffer member 40 is integrally attached to the metal member 44. As illustrated in FIG. 5 (A), one buffer member 40 is provided with respect to each space between the tooth portions 36 of the comb portion 34, and the buffer member 40 is a plate member corresponding to the metal member 44 that has been coated by thermal spraying. When press-bending the glass plate 14, the buffer member 40 is rotated and fixed to the contact position where the buffer member 40 fills the space between the tooth portions 36 of the comb portion 34 and slightly protrudes toward the upper mold 20 from the surface of the tooth portions 36. Also, when cooling the glass plate 14, the buffer member 40 is rotated and fixed to the non-contact position.

When press-bending the glass plate 14, the moving mechanism 42 as illustrated in FIG. 2 rotates the metal member 44 and hence the buffer member 40 to the contact position such that the buffer member 40 may be interposed between the upper mold 20 and the lower mold ring 22 (specifically, between the glass plate 14 that is attached to the upper mold 20 while being press-bent and the comb portion 34 of the lower mold ring 22) to come into contact with the glass plate 14. On the other hand, when cooling the glass plate 14 on the lower mold ring 22, the moving mechanism 42 rotates the metal member 44 and hence the buffer member 40 to the non-contact position such that the buffer member 40 may be retracted from the position between the upper mold 20 and the lower mold ring 22 to not come into contact with the glass plate 14.

Also, as illustrated in FIG. 3, the moving mechanism 42 may have a metal member 50 made of pure titanium or the like, and the metal member 50 may be supported by the moving mechanism 42 to freely advance and retract. That is, the metal member 50 is a member that is advanced and retracted by the moving mechanism 42. The metal member 50 may be provided for each of the buffer pieces 40a, 40b, 40c, ... of the buffer member 40, and the metal member 50 may be shaped such that it can fill the space between the tooth portions 36 of the comb portion 34. In this case, the moving mechanism 42 may be implemented by a servo motor that is mounted on the metal member 50. Also, in some cases, the moving mechanism 42 may be provided for each of the buffer pieces 40a, 40b, 40c, ... of the buffer member 40.

The above-described buffer member 40 is integrally attached to the metal member 50. As illustrated in FIG. 5 (A), one buffer member 40 is provided with respect to each space between the tooth portions 36 of the comb portion 34, and the buffer member 40 is a plate member corresponding to the metal member 50 that is coated by thermal spraying. When press-bending the glass plate 14, the buffer member 40 is moved and fixed to the contact position to fill the space between the tooth portions 36 of the comb portion 34 and slightly protrude toward the upper mold 20 from the surface of the tooth portions 36. Also, when cooling the glass plate 14, the buffer member 40 is moved and fixed to the non-contact position.

When press-bending the glass plate 14, the moving mechanism 42 as illustrated in FIG. 3 moves the metal member 50 and hence the buffer member 40 to the contact position such that the buffer member 40 may be interposed between the upper mold 20 and the lower mold ring 22 (specifically, between the glass plate 14 that is attached to the upper mold 20 while being press-bent and the comb portion 34 of the lower mold ring 22) to come into contact with the glass plate 14. On the other hand, when cooling the glass plate 14 on the lower mold ring 22, the moving mechanism 42 moves the metal member 50 and hence the buffer member 40 to the non-contact position below the frame portion 32 and outside the plane of the glass plate 14 such that the buffer member 40 may be retracted from the position between the upper mold 20 and lower mold ring 22 and not come into contact with the glass plate 14.

Also, as illustrated in FIG. 4, the moving mechanism 42 may have a metal member 60 made of pure titanium or the like, and the metal member 60 may be slidably supported by the moving mechanism 42. The metal member 60 is a metal plate that is arranged to expand parallel to the upper surface of the lower mold ring 22 and may be arranged to have an L-shaped cross-section, for example. The metal member 60 is provided for each of the buffer pieces 40a, 40b, 40c, ... of the buffer member 40, and the metal member 60 is shaped such that it can at least fill the space between the tooth portions 36 of the comb portion 34 (e.g., shape covering the entire comb portion 34).

In this case, the moving mechanism 42 may be implemented by a sliding mechanism including a cylinder 62 that is mounted and fixed to the shuttle 24 and a slidable piston 64 that is slidable with respect to the cylinder 62. The piston 64 extends from the frame portion 32 of the lower mold ring 22 toward the center. The above-described metal member 60 is connected to one end of the piston 64 of the moving mechanism 42. Note that the cylinder 62 and the piston 64 of the moving mechanism 42 may be provided with respect to each of the buffer pieces 40a, 40b, 40c, ... of the buffer member 40, for example.

The above-described buffer member 40 is integrally attached to the metal member 60. As illustrated in FIG. 5 (B), the buffer member 40 is provided with respect to each side edge of the glass plate 14, and the buffer member 40 is arranged to extend along the corresponding side edge. The buffer member 40 is a plate member corresponding to the metal member 60 that has been coated by thermal spraying. When press-bending the glass plate 14, the buffer member 40 is slid and fixed to the contact position to fill at least the space between the tooth portions 36 of the comb portion 34 and cover the surface of the tooth portions 36. Also, when cooling the glass plate 14, the buffer member 40 is slid and fixed to the non-contact position above the frame portion 32 and outside the plane of the glass plate 14.

That is, when press-bending the glass plate 14, the buffer member 40 is slid by the moving mechanism 42 to be interposed between the upper mold 20 and the lower mold 22 and to come into contact with the glass plate 14. On the other hand, when cooling the glass plate 14, the buffer member 40 is slid by the moving mechanism 42 to be retracted from the position between the upper mold 20 and the lower mold ring 22 to not come into contact with the glass plate 14. Note that when press-bending the glass plate 14, the buffer pieces 40a, 40b, 40c, .... of the buffer member 40 may be connected to each other to form an annular shape. On the other hand, when cooling the glass plate 14, the connection between the buffer pieces 40a, 40b, 40c, ... may be released and the buffer pieces may be divided into segments along the frame portion 32.

The moving mechanism 42 illustrated in FIG. 4 causes the piston 64 to slide with respect to the cylinder 62 to thereby move the metal member 60 along the upper surface of the lower mold ring 22, and in this way, the moving mechanism 42 causes the buffer member 40 to slide with respect to the lower mold ring 22 between the contact position where the buffer member 40 comes into contact with the glass plate 14 and the non-contact position. Specifically, when press-bending the glass plate 14, the moving mechanism 42 causes the metal member 60 and hence the buffer member 40 to slide toward the center such that the buffer member 40 may be interposed between the upper mold 20 and the lower mold ring 22 (specifically, between the glass plate 14 that is attached to the upper mold 20 when being press-bent and the comb portion 34 of the lower mold ring 22) to come into contact with the glass plate 14. On the other hand, when cooling the glass plate 14 on the lower mold ring 22, the moving mechanism 42 causes the metal member 60 and hence the buffer member 40 to slide radially outward such that the buffer member 40 may be retracted from the position between the upper mold 20 and the lower mold ring 22 to be detached from (not come into contact with) the glass plate 14.

As illustrated in FIGS. 2 to 4, when press-bending the glass plate 14, the moving mechanism 42 moves the metal member 44, 50, or 60 and hence the buffer member 40 to the contact position with the glass plate 14 such that the buffer member 40 may be interposed between the upper mold 20 and the lower mold ring 22 (specifically, between the glass plate 14 that is attached to the upper mold 20 while being press-bent and the comb portion 34 of the lower mold ring 22) to come into contact with the glass plate 14. On the other hand, when cooling the glass plate 14 on the lower mold ring 22, the moving mechanism 42 moves the metal member 44, 50, or 60 and hence the buffer member 40 to the non-contact position where no contact with the glass plate 14 takes place such that the buffer member 40 may be retracted from the position between the upper mold 20 and the lower mold ring 22 to not come into contact with the glass plate 14.

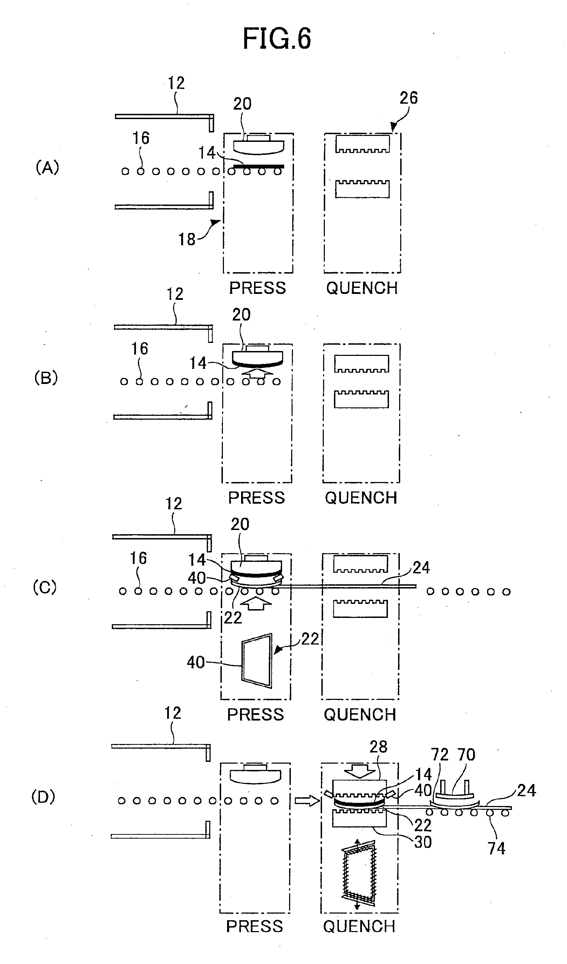

In the following, an exemplary method of manufacturing the glass plate 14 by the apparatus 10 for manufacturing tempered glass according to the present embodiment is described with reference to FIG. 6 along with FIGS. 2 to 4. FIG. 6 illustrates exemplary process steps of a glass bending process performed by the apparatus 10 for manufacturing tempered glass according to the present embodiment where bending is performed outside a furnace.

In the present embodiment, the glass plate 14 that is cut into a predetermined planar shape is placed horizontally, one by one, on the roller conveyer 16 and is loaded into the heating furnace 12. The glass plate 14 that is loaded into the heating furnace 12 is heated and softened by a heater within the heating furnace 12 to a bendable temperature. Thereafter, when the glass plate 14 reaches the conveying direction downstream end of the roller conveyor 16 within the pressing unit 18 that is arranged adjacent to the heating furnace 12 (FIG. 6 (A)), the glass plate 14 is lifted by the lift jet that supports air floating of the glass plate 14, and the glass plate 14 is attached to the lower surface of the upper mold 20 by suction (FIG. 6 (B)). When the glass plate 14 is attached to the lower surface of the upper mold 20 by suction, the glass plate 14 that has been heated and softened is curved to conform to the lower surface shape of the upper mold 20.

After the glass plate 14 that has been heated and softened is attached to the lower surface of the upper mold 20 by suction, the shuttle 24 moves from the cooling unit 26 toward the pressing unit 18, and in this way, the lower mold ring 22 may be moved horizontally to be positioned directly below the upper mold 20 that is holding the glass plate 14 such that the lower mold ring 22 may come into contact with the glass plate 14. After the lower mold ring 22 is moved horizontally to be positioned directly below the upper mold 20, the shuttle 24 is lifted by the lifting unit, and the lower mold ring 22 is raised to a position where the glass plate 14 may be held between the lower mold ring 22 and the upper mold 20.

Before lifting the shuttle 24 as described above, the moving mechanism 42 moves the metal member 44, 50, or 60 and the buffer member 40 to the contact position with the glass plate 14 and fixes the buffer member 40 to the upper surface of the comb portion 34 of the lower mold ring 22 (FIG. 2 (A), FIG. 3 (A), and FIG. 4 (A)). When the shuttle 24 is lifted while the buffer member 40 is fixed to the upper surface of the comb portion 34 of the lower mold ring 22, the glass plate 14 may be held between the upper mold 20 and the lower mold ring 22 with the buffer member 40 being interposed between the glass plate 14 and the comb portion 34 of the lower mold ring 22 (FIG. 2 (B), FIG. 3 (B), FIG. 4 (B), and FIG. 6(C)).

In this respect, in the present embodiment, when the glass plate 14 is to be press-bent by being held between the upper mold 20 and the lower mold ring 22, the lower surface of the peripheral portion of the glass plate 14 does not come into direct contact with the comb portion 34 of the lower mold ring 22 but instead comes into contact with and is supported by the buffer member 40 that is arranged on the upper surface of the comb portion 34, the buffer member 40 being supported integrally with the lower mold ring 22 on the shuttle 24. By having such a support structure for the glass plate 14, even when a large pressing force is applied when press-bending the glass plate 14 while the glass plate 14 is held between the upper mold and the lower mold ring 22, comb tooth marks of the comb portion 34 of the lower mold ring 22 may not be formed on the surface of the glass plate 14. Thus, according to an aspect of the present embodiment, adequately deep bending of the glass plate 14 may be enabled while preventing comb tooth marks and scratches from being formed on the glass plate 14 by the comb portion 34 of the lower mold ring 22.

Also, according to an aspect of the present embodiment, when press-bending of the glass plate 14 by the upper mold 20 and the lower mold ring 22 as described above is completed, the shuttle 24 is slightly lowered by the lifting unit while the glass plate 14 that has been press-bent is still attached to the lower surface of the upper mold 20 by suction, and in this way, the glass plate 14 is released from the hold between the upper mold 20 and the lower mold ring 22. In this case, the glass plate 14 is released from contact with the lower mold ring 22 that is on the shuttle 24.

After the glass plate 14 that has been press-bent is released from the hold between the upper mold 20 and the lower mold ring 22 while remaining attached to the lower surface of the upper mold 20 by suction, the moving mechanism 42 moves the metal member 44, 50, or 60 and the buffer member 40 with respect to the lower mold ring 22 from the contact position to the non-contact position such that the buffer member 40 may be retracted from the upper surface of the comb portion 34 of the lower mold ring 22 (FIG. 2 (D), FIG. 3 (C), and FIG. 4 (C)). Then, the suction attachment of the glass plate 14 to the lower surface of the upper mold 20 is released. When the suction attachment is released, the glass plate 14 is dropped onto the lower mold ring 22. In this case, the peripheral portion of the glass plate 14 does not come into contact with the buffer member 40 but instead comes into contact with the comb portion 34 of the lower mold ring 22 to be supported by the lower mold ring 22 (FIG. 2 (D), FIG. 3(C), and FIG. 4 (D)).

After the peripheral portion of the glass plate 14 comes into contact with and is supported by the comb portion 34 of the lower mold ring 22 as described above, the shuttle 24 including the lower mold ring 22 moves from inside the pressing unit 18 to the cooling unit 26 such that the lower mold ring 22 that holds and supports the glass plate 14 is moved horizontally toward the cooling unit 26. Then, air from the upper nozzle 28 and the lower nozzle 30 is blown onto the glass plate 14 that is placed on the lower mold ring 22 so that the glass plate 14 on the lower mold ring 22 may be cooled (FIG. 6 (D)).

In this respect, in the present embodiment, the glass plate 14 is directly supported on the lower mold ring 22 while being cooled, and as such, space for floating the glass plate 14 is not required and the gap between the upper and lower nozzles of the cooling unit 26 may be narrowed. As a result, in addition to enabling effective cooling of the glass plate 14, effective tempering may be enabled even with respect to a glass plate 14 that has previously been difficult to temper through quenching such as automobile safety glass having a plate thickness of no more than 2.8 mm, for example.

After cooling of the glass plate 14 as described above is completed, the glass plate 14 is lifted by a lift jet (not illustrated) or the like to be temporarily supported by a receiving bar 70 that is arranged on the lower surface of the upper nozzle 28. Then, the glass plate 14 is transferred to a transfer ring 72, and is then transferred further downstream of the cooling unit 26 to a roller conveyor 74.

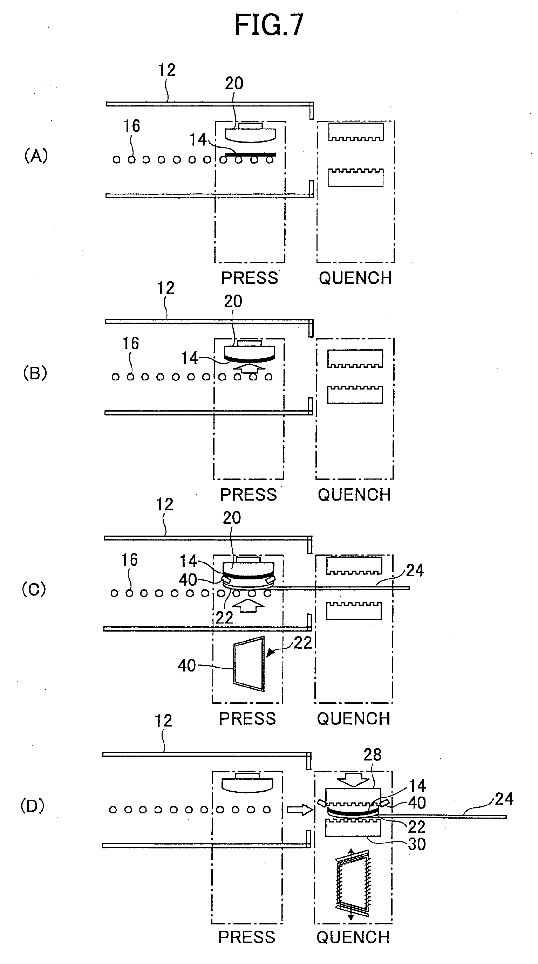

In the following, another exemplary method of manufacturing the glass plate 14 by the apparatus 10 for manufacturing tempered glass according to the present embodiment is described with reference to FIG. 7 along with FIGS. 2 to 4. FIG. 7 illustrates exemplary process steps of a glass bending process performed by the apparatus 10 for manufacturing tempered glass according to the present embodiment in a case where bending is performed inside the furnace.

In the present embodiment, the glass plate 14 that is cut into a predetermined planar shape is placed horizontally, one by one, on the roller conveyor 16 to be loaded into the heating furnace 12. The glass plate 14 that has been loaded into the heating furnace 12 is heated and softened by the heater within the heating furnace 12 to a bendable temperature. Then, after the glass plate 14 reaches the conveying direction downstream end of the roller conveyor 16 (FIG. 7 (A)), the glass plate 14 is lifted by the lift jet that supports air floating of the glass plate 14, and the glass plate 14 attached to the lower surface of the upper mold 20 by suction (FIG. 7 (B)). When the glass plate 14 is attached to the lower surface of the upper mold 20 by suction, the glass plate 14 that has been heated and softened is curved to conform to the lower surface shape of the upper mold 20.

After the glass plate 14 that has been heated and softened is attached to the lower surface of the upper mold 20 by suction, the shuttle 24 that has been located outside the heating furnace 12 moves toward the interior of the heating furnace 12, and the lower mold ring 22 is moved horizontally to a position directly below the upper mold 20 where the lower mold ring 22 may come into contact with the glass plate 14. After the lower mold ring 22 is moved horizontally to be positioned directly below the upper mold 20, the shuttle 24 is lifted by the lifting unit, and the lower mold ring 22 is raised to a position where the glass plate 14 may be held between the lower mold ring 22 and the upper mold 20.

Before lifting the shuttle 24 in the above manner, the moving mechanism 42 moves the metal member 44, 50, or 60 and the buffer member 40 with respect to the lower mold ring 22 to the contact position with the glass plate 14 and fixes the buffer member 40 to the upper surface of the comb portion 34 of the lower mold ring 22 (FIG. 2 (A), FIG. 3 (A), and FIG. 4 (A)). When the shuttle 24 is lifted while the buffer member 40 is fixed to the upper surface of the comb portion 34 of the lower mold ring 22, the glass plate 14 may be held between the upper mold 20 and the lower mold ring 22 with the buffer member 40 being interposed between the glass plate 14 and the comb portion 34 of the lower mold ring 22 (FIG. 2 (B), FIG. 3 (B), FIG. 4 (B), and FIG. 7 (C)).

In this respect, in the present embodiment, when the glass plate 14 is to be press-bent by being held between the upper mold 20 and the lower mold ring 22, the peripheral portion of the glass plate 14 does not come into direct contact with the comb portion 34 of the lower mold ring 22 but instead comes into contact with and is supported by the buffer member 40 that is arranged on the upper surface of the comb portion 34, the buffer member 40 being supported integrally with the lower mold ring 22 on the shuttle 24. By having such a support structure for the glass plate 14, even when a large pressing force is applied upon press-bending the glass plate 14 with the upper mold 20 and the lower mold ring 22, comb tooth marks may not be formed on the surface of the glass plate 14 by the comb portion 34 of the lower mold ring 22. Thus, according to an aspect of the present embodiment, adequately deep bending of the glass plate 14 may be enabled while preventing comb marks and scratches from being formed on the surface of the glass plate 14 by the comb portion 34 of the lower mold ring 22.

Also, in the present embodiment, after press-bending the glass plate 14 by holding the glass plate 14 between the upper mold 20 and the lower mold ring 22 as described above, the shuttle 24 is slightly lowered by the lifting unit while the glass plate 14 that has been press-bent remains attached to the lower surface of the upper mold 20, and in this way, the glass plate 14 is released from the hold between the upper mold 20 and the lower mold ring 22. In this case, the glass plate 14 is released from contact with the lower mold ring 22 that is on the shuttle 24.

After the glass plate 14 that has been press-bent is released from the hold between the upper mold 20 and the lower mold ring 22 while remaining attached to the lower surface of the upper mold 20, the moving mechanism 42 moves the metal member 44, 50, or 60 and the buffer member 40 with respect to the lower mold ring 22 from the contact position with the glass plate 14 to the non-contact position such that the buffer member 40 may be retracted from the upper surface of the comb portion 34 of the lower mold ring 22 (FIG. 2 (D), FIG. 3 (C), and FIG. 4(C)). Then, the suction attachment of the glass plate 14 to the lower surface of the upper mold 20 is released. By releasing the suction attachment of the glass plate 14 to the upper mold 20, the glass plate 14 is dropped onto the lower mold ring 22. In this case, the peripheral portion of the glass plate 14 does not come into contact with the buffer member 40 but instead comes into contact with the comb portion 34 of the lower mold ring 22 to be supported by the lower mold ring 22 (FIG. 2 (D), FIG. 3 (C), and FIG. 4 (D)).

After the peripheral portion of the glass plate 14 comes into contact with and is supported by the comb portion 34 of the lower mold ring 22 as described above, the shuttle 24 including the lower mold ring 22 moves from inside the heating furnace to outside the heating furnace 12 such that the lower mold ring 22 that holds/supports the glass plate 14 is moved horizontally toward the cooling unit 26. Then, air from the upper nozzle 28 and the lower nozzle 30 of the cooling unit 26 is blown onto the glass plate 14 that is placed on the lower mold ring 22, and in this way, the glass plate 14 on the lower mold ring 22 is cooled (FIG. 7 (D)).

In this respect, according to an aspect of the present embodiment, after press-bending the glass plate 14 by holding the glass plate 14 between the upper mold 20 and the lower mold ring 22 within the heating furnace 12, the glass plate 14 is cooled by the cooling unit 26 in a state where the peripheral portion of the glass plate 14 comes into direct contact with the comb portion 34 of the lower mold ring 22 rather than coming into contact with the buffer member 40 on the upper surface of the comb portion 34 of the lower mold ring 22. With such an arrangement, the glass plate 14 (particularly its peripheral portion) may be effectively cooled while appropriately supporting the glass plate 14 by the lower mold ring 22.

Thus, in the apparatus 10 for manufacturing tempered glass according to the present embodiment, when the glass plate 14 is to be press-bent by being held between the upper mold 20 and lower mold ring 22, the buffer member 40 that is supported together with the lower mold ring 22 on the shuttle 24 is moved to the contact position where the buffer member 40 comes into contact with the glass plate 14 and is arranged on the upper surface of the comb portion 34 of the lower mold ring 22, and a part or all of the peripheral portion of the glass plate 14 comes into contact with and is supported by the buffer member 40. On the other hand, when the glass plate 14 that has been press-bent is to be cooled, the buffer member 40 is retracted to the non-contact position at which the buffer member 40 does not come into contact with the glass plate 14 such that the peripheral portion of the glass plate 14 may come into direct contact with and be supported by the comb portion 34 of the lower mold ring 22. Thus, according an aspect of the present embodiment, adequately deep bending of the glass plate 14 may be enabled while ensuring effective cooling of the glass plate 14 after the bending process.

Also, in the apparatus 10 for manufacturing tempered glass according to the present embodiment, press-bending of the glass plate 14 is performed using the lower mold ring 22 that is paired with the upper mold 20 to constitute a pressing unit, and further, the glass plate 14 that has been press-bent may remain placed on the same lower mold ring 22 to be transferred to the cooling unit 26 and cooled therein. That is, the same lower mold ring 22 may be used to perform press-bending of the glass plate 14, transfer of the press-bent glass plate 14 to the cooling unit 26, and cooling of the glass plate 14 at the cooling unit 26.

In this respect, in the apparatus 10 for manufacturing tempered glass according to the present embodiment, reassembly of a lower mold ring for supporting the glass plate 14 during press-bending and a lower quench ring for supporting the glass plate 14 during transfer to the cooling unit 26 or during cooling at the cooling unit 26 is not necessary, and the lower ring supporting the glass plate 14 does not have to be exchanged when press-bending the glass plate 14 and transferring the glass plated 14 to the cooling unit 26 or cooling the glass plate 14 at the cooling unit 26. Thus, according to an aspect of the present embodiment, the cycle time from press-bending a flat glass plate 14 to cooling the press-bent glass plate 14 may be reduced, and productivity may be increased.

Further, according to an aspect of the present embodiment, in the case of molding the glass plate 14 inside the furnace as illustrated in FIG. 7, the upper mold 20 and the lower mold ring 22 of the apparatus 10 for manufacturing tempered glass that are used for press-bending the glass plate 14 are arranged within the heating furnace 12. In this way, bending of the glass plate 14 may be carried out under a high-temperature atmosphere such that high-quality bending of a glass plate having a complicated shape may be realized at low cost.

Note that in the above embodiment, a "press-molding step" as recited in the claims is implemented by press-bending the glass plate 14 by holding the glass plate 14 between the upper mold 20 and the lower mold ring 22 while having the buffer member 40 interposed between the upper mold 20 and the lower mold ring 22 and arranging the glass plate 14 to come into contact with the buffer member 40, and a "cooling step" as recited in the claims is implemented by cooling the glass plate 14 that has been press-bent at the cooling unit 26 with the glass plate 14 being placed on the lower mold ring 22 and without the glass plate 14 coming into contact with the buffer member 40.

Also, in the above embodiment, the apparatus 10 for manufacturing tempered glass includes the upper mold 20 that cannot be moved upward and downward, and the lower mold ring 22 that is supported by the shuttle 24 and is moved upward and downward with respect to the conveying face of the glass plate 14. However, the present invention is not limited to the above embodiment as long as the upper mold 20 and the lower mold ring 22 may be moved relative to each other in a direction approaching each other. That is, in some embodiments, the lower mold ring 22 may not be able to move upward and downward, and the upper mold 20 may be configured to be moved upward and downward with respect to the conveying face of the glass plate 14 by the lifting unit, for example. Also, in some embodiments, both the upper mold 20 and the lower mold ring 22 may be configured to be movable upward and downward in a direction approaching each other.

Also, in the above embodiment, after press-bending the glass plate 14, the glass plate 14 is released from the hold between the upper mold 20 and the lower mold ring 22 by lowering the shuttle 24 while keeping the glass plate 14 attached to the lower surface of the upper mold 20 by suction. However, the present invention is not limited to the above embodiment, and in the above modified embodiment where the upper mold 20 is configured to be moved upward and downward with respect to the conveying face of the glass plate 14 by a lifting unit, the glass plate 14 may be released from the hold between the upper mold 20 and the lower mold ring 22 by raising the upper mold 20 but maintaining the position of the lower mold ring 22 while keeping the glass plate 14 attached to the lower surface of the upper mold 20 by suction.

Also, in the above embodiment, before placing the glass plate 14 that has been press-bent onto the lower mold ring 22, the buffer member 40 is retracted from the upper surface of the comb portion 34 while the press-bent glass plate 14 is attached to the lower surface of the upper mold 20. However, in some embodiments, the buffer member 40 may be retracted from the upper surface of the comb portion 34 while the glass plate 14 is placed on the lower mold ring 22 to the extent that scratch marks or the like may not be formed on the surface of the press-bent glass plate 14 due to the retraction of buffer member 40.

Also, the retraction of the buffer member 40 from the upper surface of the comb portion 34 on the lower mold ring 22 may be performed after press-bending of the glass plate 14 is completed and before cooling of the glass plate 14 within the cooling unit 26 is started, for example. Also, in some embodiments, the retraction of the buffer member 40 may be performed in accordance with the start timing of the cooling process within the cooling unit 26 such as immediately (e.g., 0.5 seconds) after the cooling process is started, for example.

The present application is based on and claims the benefit of priority of Japanese Patent Application No. 2010-162040 filed on July 16, 2010 and Japanese Patent Application No. 2013-003953 filed on January 11, 2013, the entire contents of which are herein incorporated by reference.

### DESCRIPTION OF THE REFERENCE NUMERALS

- 10: apparatus for manufacturing tempered glass
- 12: heating furnace
- 14: glass plate
- 16: roller conveyor
- 18: pressing unit
- 20: upper mold
- 22: lower mold ring
- 24: shuttle
- 26: cooling unit
- 28: upper nozzle
- 30: lower nozzle
- 32: frame portion
- 34: comb portion
- 40: buffer member
- 42: moving mechanism
- 44, 50, 60: metal member (movable part)
- 62: cylinder
- 64: piston
- 70: receiving bar
- 72: transfer ring

## Claims

1. A method of manufacturing tempered glass that includes bending a glass plate into a desired shape by holding the glass plate that has been heated to a predetermined temperature between a lower mold ring and an upper mold, the method comprising:
a press-molding step of press-molding the glass plate while having a buffer member interposed between the lower mold ring and the upper mold, wherein the glass plate comes into contact with the buffer member; and
a cooling step of cooling the glass plate that has been press-molded in the press-molding step, wherein the glass plate is cooled on the lower mold ring without coming into contact with the buffer member.

2. The method of manufacturing tempered glass according to claim 1, further comprising:
a retracting step of retracting the buffer member to a non-contact position where the buffer member does not come into contact with the glass plate that has been press-molded.

3. The method of manufacturing tempered glass according to claim 2, wherein the retracting step is implemented between the press-molding step and the cooling step.

4. The method of manufacturing tempered glass according to claim 2 or 3, wherein
the lower mold ring includes a comb portion that comes into contact with the glass plate while cooling the glass plate that has been press-molded;
the buffer member is arranged to be slidable between a contact position and a non-contact position, wherein the contact position is a position that the buffer member comes into contact with the glass plate in the press-molding step, and wherein the non-contact position is a position that the buffer member does not come into contact with the glass plate in the cooling step;
in the press-molding step, the buffer member is slid to the contact position such that the buffer member covers the comb portion; and
in the retracting step, the buffer member is slid to the non-contact position such that the buffer member is retracted from the comb portion.

5. The method of manufacturing tempered glass according to claim 2 or 3, wherein
the lower mold ring includes a comb portion that comes into contact with the glass plate while cooling the glass plate that has been press-molded;
the buffer member is arranged to be rotatable between a contact position and a non-contact position, wherein the contact position is a position that the buffer member comes into contact with the glass plate in the press-molding step, and wherein the non-contact position is a position that the buffer member does not come into contact with the glass plate in the cooling step;
in the press-molding step, the buffer member is rotated to the contact position such that the buffer member fills a space between tooth portions of the comb portion; and
in the retracting step, the buffer member is rotated to the non-contact position such that the buffer member is retracted from the space between the tooth portions of the comb portion.

6. The method of manufacturing tempered glass according to claim 2 or 3, wherein
the lower mold ring includes a comb portion that comes into contact with the glass plate while cooling the glass plate that has been press-molded;
the buffer member is arranged to advance and retract between a contact position and a non-contact position, wherein the contact position is a position that the buffer member comes into contact with the glass plate in the press-molding step, and wherein the non-contact position is a position that the buffer member does not come into contact with the glass plate in the cooling step;
in the press-molding step, the buffer member is moved to the contact position such that the buffer member fills a space between tooth portions of the comb portion; and
in the retracting step, the buffer member is moved to the non-contact position such that the buffer member is retracted from the space between the tooth portions of the comb portion.

7. The method of manufacturing tempered glass according to any one of claims 1 to 6, wherein a thickness of the glass plate to be bent and molded is less than or equal to 2.8 mm.

8. The method of manufacturing tempered glass according to any one of claims 1 to 7, wherein the press-molding step is performed inside a heating furnace.

9. An apparatus for manufacturing tempered glass that is configured to bend a glass plate into a desired shape by holding the glass plate that has been heated to a predetermined temperature between a lower mold ring and an upper mold, the apparatus comprising:
a buffer member that is interposed between the lower mold ring and the upper mold to come into contact with the glass plate when the glass plate is to be press-molded by the lower mold ring and the upper mold, wherein the buffer member is retracted from the position between the lower mold ring and the upper mold to not come into contact with the glass plate when the glass plate that has been press-molded is to be cooled on the lower mold ring.

10. The apparatus for manufacturing tempered glass according to claim 9, wherein the lower mold ring includes a comb portion that comes into contact with the glass plate while cooling the glass plate that has been press-molded.

11. The apparatus for manufacturing tempered glass according to claim 10, wherein the lower mold ring includes
a movable part that is arranged to be slidable and is capable of covering the comb portion;
the buffer member that is mounted on a surface of the movable part facing the upper mold when the movable part covers the comb portion; and
a sliding mechanism that slides the movable part to a contact position and a non-contact position, wherein the contact position is a position that the buffer member comes into contact with the glass plate and covers the comb portion when the glass plate is to be press-molded, and wherein the non-contact position is a position that the buffer member does not come into contact with the glass plate and is retracted from the comb portion when the glass plate that has been press-molded is to be cooled.

12. The apparatus for manufacturing tempered glass according to claim 10, wherein the lower mold ring includes
a movable part that is arranged to be rotatable and is capable of filling a space between tooth portions of the comb portion;
the buffer member that is mounted on a surface of the movable part facing the upper mold when the movable part fills the space between the tooth portions of the comb portion; and
a rotating mechanism that rotates the movable part to a contact position and a non-contact position, wherein the contact position is a position that the buffer member comes into contact with the glass plate and fills the space between the tooth portions of the comb portion when the glass plate is to be press-molded, and wherein the non-contact position is a position that the buffer member does not come into contact with the glass plate and is retracted from the space between the tooth portions of the comb portion when the glass plate that has been press-molded is to be cooled.

13. The apparatus for manufacturing tempered glass according to claim 10, wherein the lower mold ring includes
a movable part that is arranged to advance and retract, and is capable of filling a space between tooth portions of the comb portion;
the buffer member that is mounted on a surface of the movable part facing the upper mold when the movable part fills the space between the tooth portions of the comb portion; and
an advancing/retracting mechanism that moves the movable part to a contact position and a non-contact position, wherein the contact position is a position that the buffer member comes into contact with the glass plate and fills the space between the tooth portions of the comb portion when the glass plate is to be press-molded, and wherein the non-contact position is a position that the buffer member does not come into contact with the glass plate and is retracted from the space between the tooth portions of the comb portion when the glass plate that has been press-molded is to be cooled.

14. The apparatus for manufacturing tempered glass according to any one of claims 11 to 13, wherein the movable part and the buffer member are moved from the contact position to the non-contact position after the press-molding of the glass plate has been completed and before the cooling of the glass plate is started.

15. The apparatus for manufacturing tempered glass according to any one of claims 11 to 14, wherein the movable part and the buffer member are moved from the contact position to the non-contact position according to a timing at which the cooling of the glass plate that has been press-molded is started.

16. The apparatus for manufacturing tempered glass according to any one of claims 11 to 15, wherein the movable part is supported integrally with the lower mold ring.

17. The apparatus for manufacturing tempered glass according to any one of claims 9 to 16, wherein the buffer member is provided with respect to at least two sides of the glass plate that has a substantially rectangular shape.

18. The apparatus for manufacturing tempered glass according to any one of claims 9 to 16, wherein the buffer member is provided with respect to an entire peripheral portion of the glass plate.

19. The apparatus for manufacturing tempered glass according to any one of claims 9 to 18, wherein the buffer member is a metal member that has been thermally sprayed or a felt member.
